# EUROPEAN PATENT SPECIFICATION

(11) **EP 1 981 659 B1**
(45) Date of publication and mention of the grant of the patent: **25.01.2017**
(21) Application number: 07801975.9
(22) Date of filing: 29.08.2007
(51) Int. Cl.: B08B 17/06, B29C 59/02, B29C 39/14

(54) **ANTIFOULING COATING**
FÄULNISVERHINDERNDE BESCHICHTUNG
REVÊTEMENT ANTISALISSURE

(30) Priority: 29.08.2006 EP 06018001
(43) Date of publication of application: 22.10.2008
(73) Proprietor: Hochschule Bremen, 28199 Bremen (DE)
(72) Inventor: KESEL, Antonia, 66119 Saarbrücken (DE); LIEDERT, Ralf, FIN-90570 Oulu (FI)
(74) Representative: Steinecke, Peter
(86) International application number: PCT/EP2007/007554
(87) International publication number: WO 2008/025538

(56) References cited:
- EP-A1- 0 909 747
- EP-A2- 0 933 388
- WO-A-96/04123
- US-A- 5 331 074
- US-A- 5 848 769
- US-A1- 2002 164 443
- US-B1- 6 649 266
- BERNTSSON K M ET AL: "Reduction of barnacle recruitment on micro-textured surfaces: Analysis of effective topographic characteristics and evaluation of skin friction", BIOFOULING: THE JOURNAL OF BIOADHESION AND BIOFILM RESEARCH, TAYLOR & FRANCIS, GN, vol. 16, 1 January 2000 (2000-01-01), pages 245-261, XP009114940, ISSN: 0892-7014, DOI: 10.1080/08927010009378449
- P.R. VISWANATH: 'Aircraft viscous drag reduction using riblets' PROGRESS IN AEROSPACE SCIENCE vol. 38, 2002, pages 571 - 600

## Description

### Field of the invention

The present invention generally relates to non-toxic antifouling coatings. More specifically, the present invention provides an antifouling coating comprising a polymer with a defined surface topology. In particular, the present invention relates to an elastic polymeric coating having a defined microstructured surface and a low surface energy as defined in the claims. Furthermore, the present invention relates to methods for producing the microstructured coating and its application to objects intended to be protected from fouling. Moreover, the present invention relates to a microstructured silicone coating, its use for the protection of objects against fouling as well as compositions and objects comprising the coating.

### Background of the invention

All natural or artificial surfaces such as stones, hulls, navigation marks, hull planking, sea tons, offshore platforms, fishing nets and other objects being exposed to an aqueous medium, particularly seawater, are sooner or later coated by organic overgrowth. Depending on the type of water, this overgrowth consists of marine organisms such as bacteria, algae, barnacles, mussels and the like. Although in middle and northern Europe the organic infestation mainly consists of barnacles, blue mussels and algae, the diversity of these organisms and the environments in which they live create complex problems that any useful antifouling coating must overcome. While fouling organisms may not be obstructive for stones and foot bridges, by contrast, for ships, they add weight, leading to an increased hydrodynamic drag, increased fuel consumption, accelerated corrosion of the hull as well as decreased speed, range and manoeuvrability, and thereby to higher costs concerning fuel and cleaning.

Therefore, antifouling coatings for preventing infestation by organisms on the surface of objects which are exposed to sea water or brackish water have been used for a long time and can be grouped into antifoulings which include biocides and those which are biocide-free. Biocide-free antifouling coatings mainly possess anti-adhesion properties, which are intended to prevent the attachment of marine organisms. Since the effectiveness of biocide-free antifouling coatings hitherto available, however, is limited, so that mechanical cleaning of the ship's hull or of the underwater construction becomes necessary within relatively short periods of time, the problem of antifouling protection still remains to be solved.

Alternatively, antifouling coatings such as paint compositions comprising biocides indeed are more effective in protecting against fouling, but have the major drawback of low environmental compatibility, since they are generally toxic at low concentrations. In this context, antifouling biocides which contain heavy metals are particularly problematic, since they cause contamination of the sea water and of the sea bed, especially in the area of harbors, thereby causing deformation in many kinds of sea life. At present, most commonly used antifouling paint compositions contain the organic tin compound tributyltin (TBT) which is continuously released from the antifouling paint and has a highly unspecific toxicity, since it does not only induce the seawater contamination, but also destroys the ecosystem.

Alternative biocides to TBT as antifouling agent, such as for example, copper oxide suffer from the same problem of being toxic and unspecific thus damage the environment when released from the coatings based on such compounds.

Therefore, there is an actual trend towards so-called "non-toxic" antifoulings, such as protection by use of electric current, sound waves, or vibrations, intended to influence the settling behavior of fouling organisms; see for example (Leya et al., 10th International Congress of Marine Corrosion and Fouling, University of Melbourne (February 1999), Additional Papers, 98-110; Mackie et al., Zebra Mussel Technical Notes Collection (ERDC TN-ZMR-2-22) (2000), U.S. Army Engineer Research and Development Center, Vicksburg, MS; Schoenbach et al. Zebra Mussels and Other Aquatic Nuisance Species (ed: Frank D'itri), Ann Arbor Press (1996); Smythe and Dardeau, Zebra Mussel Technical Notes Collection (ZMR-3-22) (2000), U.S. Army Engineer Research and Development Center, Vicksburg, MS (1999). However, also these approaches suffer from several drawbacks such as high energy input, necessity of elaborate devices and other measures to be taken in order to achieve the intended antifouling activity.

Following three documents describe different micro-textured surfaces and their effects.

EP 0 909 747 A1 describes a method for producing a self-cleaning property of surfaces, in particular of surfaces of roofing tiles and corresponding ceramic objects produced by the method. The self-cleaning property is achieved by generating a surface on objects comprising hydrophobic elevations of ceramic material embedded in Siloxan. The application does not indicate, whether the described surfaces have any antifouling properties.

An scientific article by Berentsson et al. in Biofouling 16 (2000), 245-261 investigates five designed micro-textured surfaces arranged as longitudinal grooves with different profile depths, widths and angles of inclination and their effects on barnacle fouling and hydrodynamic drag. The Rz-Values of the tested surfaces are 32,9+/-11, 64, 352,5+/-9,3, 46 and 69 µm.

US 5,848,769A relates to articles that can be applied to surfaces to reduce the drag caused by fluids (e.g., air, gas, water, etc.) flowing across such surfaces, wherein the articles comprise an outer layer having an exposed, patterned surface that reduces the drag caused by a fluid flowing over the surface; an inner, reinforcing layer, and an intermediate bonding layer for bonding the outer layer to the reinforcing layer. Besides drag caused by fluids no other properties, in particular no influence of the surfaces described in the application on fouling processes is discussed or suspected.

### Summary of the invention

The present invention overcomes the drawbacks of the prior art by providing the embodiments characterized in the claims and described further below. Hence, the present invention provides a microstructured surface as an alternative to biocidal paints, which in accordance with the present invention combines of the advantageous antifouling properties of a flexible polymer such as silicone rubber with the antifouling activity of a regular surface topography. In the course of the present invention, experiments revealed that by using such a microstructured elastic antifouling coating, adhesion of marine organisms to objects exposed to seawater significantly can be reduced, thereby providing an effective antifouling strategy.

In contrast to the aforementioned use of environmentally toxic agents, the antifouling strategy of the present invention is solely based on purely physical properties of the coating and therefore providing a non-toxic but efficient protection of submarine objects against settlement of foulers without doing any harm to the environment.

Thus, the present invention is directed to an non-toxic antifouling coating comprising a surface which is microstructured and elastic, preferably, wherein the microstructure comprises a regular or random pattern of elevations and depressions made of a polymer as characterized in the claims.

The present invention further relates to a method of producing an elastic antifouling coating as characterized in the claims comprising:
(a) subjecting a flexible polymer to a microstructured template;
(b) allowing the polymer to form a microstructured surface which is complementary to that of the template; and
(c) obtaining the product resulting from step (b).

In a further aspect, the present invention concerns an object comprising an antifouling coating according to the present invention.

Furthermore, the present invention provides a method of producing an object with a surface having improved antifouling properties as characterized in the claims, comprising:
(a) pretreating the surface of an object with a primer onto which the polymer is intended to be applied;
(b) applying a liquid polymer to the pretreated surface;
(c) adjusting a microstructured template onto the liquid polymer, imprinting the image of its surface on the polymer;
(d) curing the polymer while the template is adjusted; and
(e) removing the template from the cured polymer.

In addition, the present invention relates to the use of the antifouling coating according to the present invention for the protection of surfaces of objects against fouling or for reducing adhesion of marine organisms.

### Brief description of the drawings

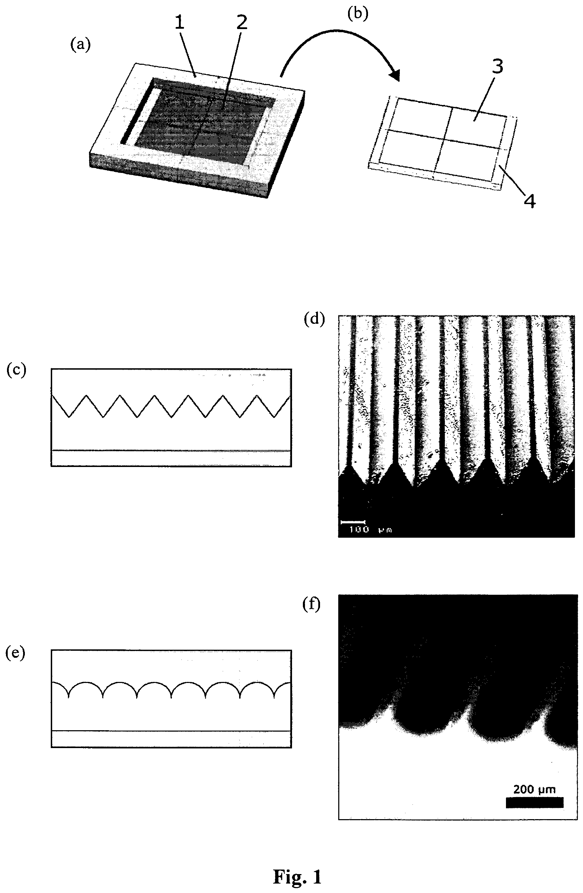

- **Fig. 1:**: (a) illustrates the schematic course of the production of the silicone surfaces. Within casting molds made of PVC (1), surface elements of microstructured special films (2) (200 mm x 200 mm) were centrically applied and filled with fluent silicone (PDMS) mass.
(b) illustrates the detachment of the PDMS at after a curing time of about 12 hours from the frame as an elastic film (3) and its fixation onto a carrier plate (4).
(c) illustrates a schematic cross-section of a riblet film, which serves as a matrix for the silicone casting.
(d) illustrates a scanning electron microscope picture, representing silicone rubber as a cast of a riblet film, i.e. a test surface (coating) with imprinted riblet topography well showing its casting accuracy; rill spacing: 175.5 µm.
(e) illustrates a schematic cross-section of a lenticular film, which serves as a matrix for the silicone casting.
(f) illustrates a scanning electron microscope picture, representing silicone rubber as a cast of a lenticular film, i.e. a test surface (coating) with imprinted lenticular topography well showing its casting accuracy, rill spacing: 254 µm.

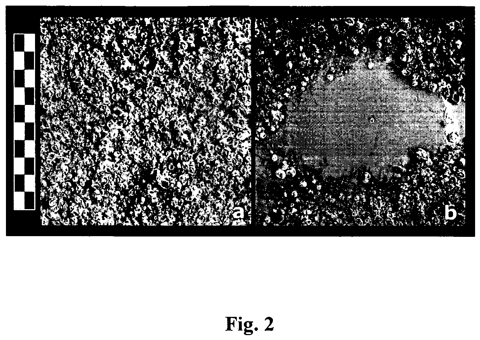

- **Fig. 2:**: illustrates test plates showing varying overgrowth. (a) Strongly overgrown test surface made of UV varnish having no surface structure applied; the larvae of the barnacles can attach and form extensive colonies. (b) Weakly overgrown test surface made of soft PDMS. The scale bars each indicate a range of 100 mm. Both test plates are taken from the same test series.

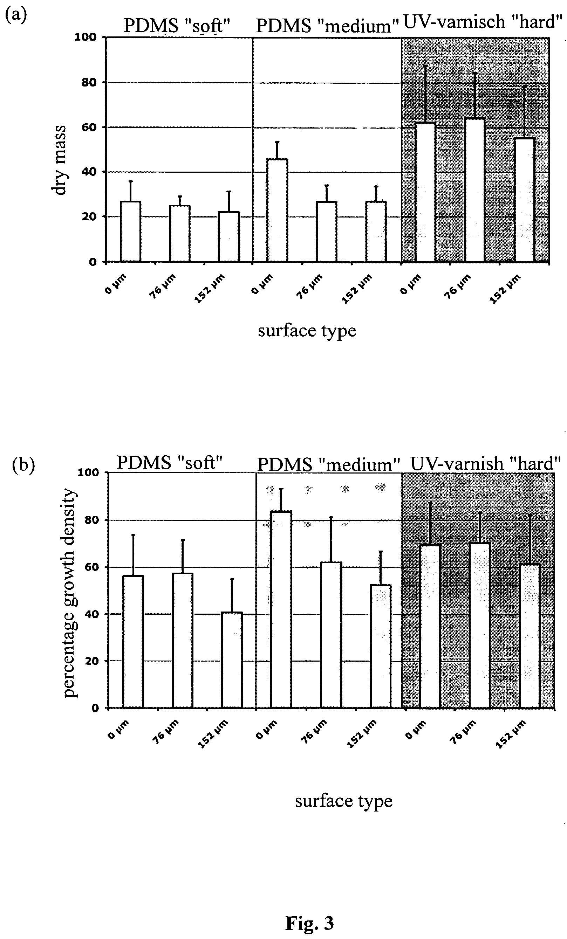

- **Fig. 3:**: illustrates the dependency of growth density by barnacles and its dry mass for each individual test surface on the plate's material properties and surface microstructures. Growth density, being the percentage of the overgrown area in relation to the total area of the test plate is given in [%]. The percentage of growth density is a common standard for quantification of fouling and therefore also serves as criterion for the antifouling quality of a surface. The dry mass is given in [g]. The spectrum of the different silicone surfaces used, suggests a connection between the degree of surface roughness and the sensitivity of a surface to be overgrown.
(a) Illustrates the averaged dry mass of the overgrowth for each individual test surface. The T-shaped bars on the columns represent the standard deviation s from the mean value. It is shown that the dry mass of all silicone surfaces significantly differs from the smooth and microstructured UV varnish surfaces (U Test according to Mann and Whitney). Compared to the 0 µm reference surface made of UV varnish, the "most effective" silicone surface (R_{Z} = 152 µm) showed a reduction of the dry mass of 65.6 % and a reduction of growth density of 42.1 %; see (b). Among the substrate types tested, the silicone surfaces show the least fouling. Compared to their counterparts made of UV hard varnish although having the same surface topography, the plates made of silicone rubber show about 57.1 % (R_{Z} = 0 µm), 62.2 % (R_{Z} = 76 µm) and 60.0 % (R_{Z} = 152 µm) less dry mass.
(b) Illustrates the averaged growth densities of the individual test surfaces. The T-shaped bars on the columns represent the standard deviation s from the mean value.
   Generally, in (a) and (b) it is shown that with increasing degree of roughness of the silicone surfaces a decrease in the average growth densities and the assessed dry mass is detected. Compared to all test plates both types of silicone surfaces (soft; Shore A28 and medium-hard; Shore A43) show least fouling. The average dry mass of the 0 µm surface for the soft PDMS surfaces is at slightly higher values compared to that of the 76 µm and 152 µm surfaces. The percentage growth density on the soft 76 µm silicone plates is even higher than that on the unstructured surface of the same silicone type.
   Concerning the growth density analysis, a clear connection between the substrate's surface roughness and the growth density can be detected. Considering the growth densities for the two types of test plates made of PDMS (PDMS "soft" and PDMS "medium", respectively), the settling behavior of the cyprid larvae is obviously influenced by the microstructure. Thus, the differences in the dry mass assessed for the PDMS plates and UV varnish plates, respectively, must be due to the physical and chemical properties of the plate material.

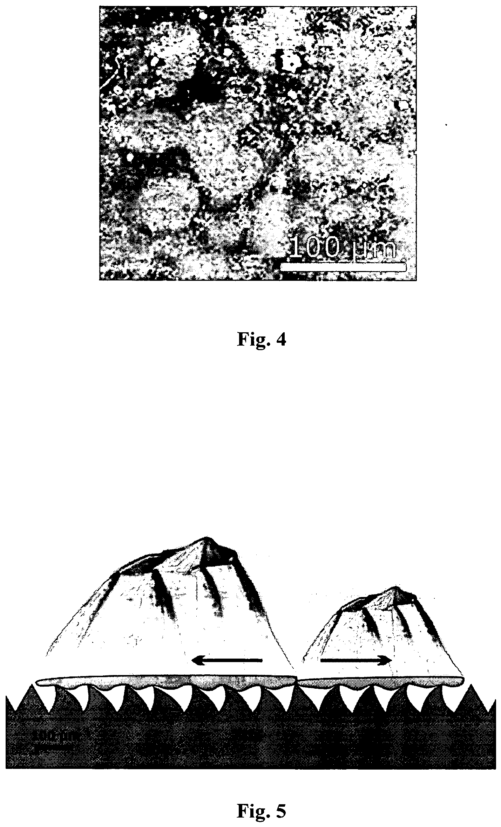

- **Fig. 4:**: illustrates a picture of intensified contrast showing an enlarged 152 µm silicone surface. the circular blots point to the former presence of balanides. The borders and spaces indicate pollutions and some single pups (light blots), respectively, whereas the former settled areas are relatively clean.
- **Fig. 5:**: illustrates a schematic model of a conceivable self-cleaning mechanism of microstructured silicone surfaces. Two growing barnacles (*Balanus crenatus*) competing for settle area. Since the basal plates (light grey) cover the elastic silicone ribs (dark grey) only on the peaks of the surface profile, the effective contact area and thus the binding forces between the two layers are only weak. The radial growth of the animals can stimulate shear forces when contacting neighboring individuals, in the consequence of which one or both basal plates detach from the substrate. According to this model, at a certain fouling threshold, some sort of self-cleaning process is initiated, in the consequence of which the silicone surface disposes of the macrofoulers.

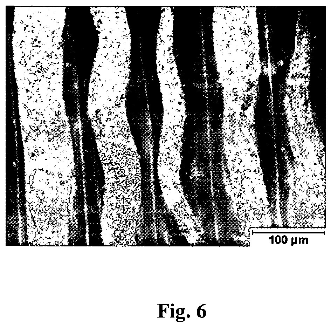

- **Fig. 6:**: illustrates a microscopic detailed picture of the bottom side of a basal plate of *Balanuscrenatus*, which was detached from a 152 µm silicone surface. The snake-shaped profile in the cement is a negative print of the microstructured silicone. The profile maxima (light broad stripes) represent the maximum depth of penetration of the protein glue into the zigzag-shaped structures of the substrate.

### Definitions

"antifouling property" and "antifouling activity", as the terms are used herein refer to any of such properties that a certain surface is inert to deposition of a material thereon, that is, a property that various materials are less likely to be deposited on a certain surface, and a property that materials, even when once deposited on a certain surface, can be easily removed. The term "antifouling property" and "antifouling activity", respectively, preferably means a fouling reduction in the growth and/or biomass on the antifouling coating of about at least 90% compared to an uncoated standard as described in the examples. More preferably, the final reduction is about at least 80%, more preferably at least 75% and particularly preferred at least 70% compared to an uncoated standard.

"toxicity", as the term is used herein, refers to the ability of a coating to kill marine organisms attached to it, or to repel the organisms seeking to attach to it. Toxic coatings may have other effects, such as illness, deformity, or reproductive failure on marine organisms.

"biofouling", as the term is used herein, generally refers to the unintended attack of surfaces by animal and plant groups, also referred to as fouling organisms, biofoulers or simply foulers.

"surface energy" or "surface wetting capacity", as the terms are used herein, generally refer to, one important characteristics of a surface material of an object, i.e. its ability to be freely wetted by a liquid. It concerns the liquid-solid surface interface, where wetting of the surface occurs, if the liquid's molecules are stronger attracted to the molecules of the solid surface than to each other, i.e. the adhesive forces are stronger than the cohesive forces. By contrast, a surface is not wetted, if the liquid molecules are more strongly attracted to each other than to the molecules of the solid surface, i.e. the cohesive forces are stronger than the adhesive forces. Surface energy can be quantified by measuring the contact angle of a drop of liquid placed on the surface of the inspected object. A contact angle is less than 90° indicates at least a partial wettability of the surface, a contact angle of 0° indicates complete wetting of the surface and consequently a contact angle is exceeding 90° indicates only little wetting, if any. Based on the YOUNG's equation the surface energy can be calculated from the contact angle. The value of surface energy is given in [energy/unit area], for example in J·m⁻² = Nm·m⁻² = N·m⁻¹.

"surface microstructure", as the term is used herein, is defined by the technically standardized unit of the "averaged surface roughness depth (peak-to-valley height) R_{Z}" and is calculated according to Matek *et al.* 2001; see infra.

"rill spacing", as the term is used herein, generally refers to the distance between the deepest points of two profile grooves (rills).

"roughness depth", as the term is used herein, generally refers to the peak-to-valley height of a respective profile and microstructured surface, respectively.

"vulcanization" or "curing" as the terms are used herein, generally refer to a chemical process in which individual polymer rubber molecules are linked to other polymer molecules by atomic bridges, leading to a more or less elastic rubber molecules are cross linked to a greater or lesser extent. Vulcanization renders the bulk material harder, more durable and confers resistance to chemical attacks, but simultaneously renders the surface of the material smoother. Vulcanized polymers have strong covalent bonds, because of which they are insoluble and infusible.

### Detailed description of the invention

The present invention relates to protection strategies against infestation of objects exposed to an aqueous medium. More specifically, the present invention pertains to an antifouling strategy based on purely physical characteristics as characterized in the claims and described below. In particular, an antifouling coating with a specific surface topography, conferring antifouling properties to objects covered with this coating is disclosed, wherein the antifouling coating comprises a polymer comprising Polydimethylsiloxane (PDMS) having a surface energy of about 20-25 mN/m and comprising a surface which is microstructured and elastic. wherein the microstructure comprises a regular or randomly distributed pattern of elevations and depressions, characterized in that Rz=152 µm.

The antifouling coating of the present invention is based on the combination of a microstructured surface and its elastic properties. Experiments performed in accordance with the present invention demonstrate that such a microstructured elastic surface is capable of substantially reducing the infestation of surfaces exposed to water with foulers. Investigations of the surface topography of the antifouling coating according to the present invention and detailed inspections of the skin of some marine organisms which are known not to be afflicted with fouling surprisingly revealed striking similarities in the physical constitution of the respective surfaces.

As described in the examples, the antifouling coating of the present invention is capable of substantially reducing the growth density of barnacles and its dry mass on a test surface; see also Fig. 3. Furthermore, Fig. 3 illustrates the joined effect of microstructure and elasticity of the surface proving the advantageous antifouling properties of a flexible polymer such as silicone rubber together with the antifouling activity of a regular surface topography.

Shark species, such as nurse sharks (*Ginglymostoma cirratum*) preferably stay near the coast and remain stationary for a considerable time on the bottom of the sea and in caves, because of which contrary to continuously swimming shark species they are highly exposed to overgrowth (fouling) by larval stages of fouling organisms. On closer examination of the skins of those animals, however, there is nearly no parasitic overgrowth detectable.

Detailed inspections of the shark skin revealed it to have a special surface topography, i.e. to be strewn with small dental-like scales (denticles), mainly consisting of hydroxyapatite (Ca₅(PO₄)₃OH). The denticles have a typical form and orientation rendering the shark's skin relatively smooth when running over it in caudal direction, whereas it feels rough as sandpaper when running over it in the opposite direction. The bases of the individual denticles are anchored in the real dermal layer, which mainly consists of collagen-rich connective tissue and is in contrast to the scales soft and elastic. This elasticity (flexibility) allows for a relative motion of the single denticles against each other, because of which the rough shark skin is not a rigid inflexible surface but rather a functional system of composite materials which from an evolutionary point of view has adapted to the different requirements of the water.

Without intending to be bound by theory it is believed that the microstructured and elastic surfaces of the present invention closely resemble the shark skin and thus could explain why these animals are not afflicted with infestation of marine organisms and fouling, respectively. On the other hand, the experiments and investigations performed in accordance with the present invention make it prudent to assume that the skin of shark species such as nurse shark could serve as a model for preparing artificial antifouling surfaces and thus coating compositions and applications.

As can be inferred from the examples, the microstructured surface has been exemplified with a silicone based polymer. Silicone based polymers such as polydimethylsiloxanes have already been suggested for fouling control coatings in the early 1970's. For instance, silicone-based formulations are disclosed in U.S. Pat. Nos.: 4,025,693; 4,080,190; 4,227,929. Also, Japanese patent application 96830/76 discloses an antifouling paint that uses a mixture of a silicone oil and an oligomer-like silicone rubber having terminal hydroxyl groups. However, in most if not all of these applications the silicone coatings were based on the release of added silicon oils, which cannot be degraded in the environment and therefore enrich in organs of marine creatures. On the other hand, although a "self-cleaning" effect of silicone surfaces is known, the impact of the microstructure on the adhesive properties of such surfaces, in particular for certain kinds of marine organisms was not known.

In this respect, the person skilled in the art will understand that the present invention does not concern the so-called "Lotus-effect" which is described as a "self-cleaning" mechanism of surfaces and which prior to the present invention has been employed in the prior art for the design of surfaces with self-cleaning properties; see international application WO96/04123, German patent application DE 198 037 87 A1 and Japanese patent application JP2004/099912A. Similarly, US patent application publication No. US 2002/0164443 A1 describes geometrical shaping of surfaces with a lotus effect, in particular surface structures with a period of 1.5 and 3 µm, respectively, and a height of 1 µm, which are. molded in poly(propylene) and fluoroalkyl acrylate grafted permanently onto the resultant surfaces thereby inter alia reducing the surface energy to less than 15 mN/m. These surface structures are described to have lotus effect. The antifouling coating of the present invention is not only different in its surface structure from those in the prior art, but can also be more easily prepared. For example, instead of using the quite complex and expensive Liga method requiring X-ray lithography, electroplating, and casting, which is needed in order to achieve the rather small protuberances and spacing described in US 2002/0164443 A1, the antifouling coating of the present invention can be advantageously be produced by using for example a yet fluid silicone rubber to which microparticles such as simple glass granulates are added, which can be simply produced from recycled glass, said mixture being capable of forming an appropriate surface structure during the curing process; see also Example 3. Furthermore, the antifouling coating of the present invention is superior to those surfaces relying on the Lotus-effect, since the latter is dependent on a particular wettability of the surface and exerts its effect only for objects which are being exposed to water and air. The antifouling coating of the present invention, however, is particularly suited for subaqueous objects without the necessity of any kind of air flow or other streaming forces.

The present invention for the first time provides an antifouling coating based on the combination of the antifouling characteristics of silicone (i.e. low surface energy) and the surface topology of shark skin (i.e. a microstructured surface) conferring protection against fouling to sharks. In particular, the present invention provides an antifouling strategy based on an "artificial shark skin", i.e. a synthetic polymeric coating based on the model of a shark's skin and providing a combination of an appropriate material having a low surface energy with specific physical characteristics presented by the shark skin such as elasticity and topography (microstructure). As mentioned, the antifouling coating of the present invention and methods of producing the same have several advantages over the prior art. First, the antifouling coatings of the present invention are non-toxic. Second, the antifouling coatings of the present invention can be made of ready-to-use components such as silicone rubber and microparticles such as glass granulates of recycled glass. Thus, though imprinting processes can be used, other processes can be used as well without the need of a negative mold of the desired structure beforehand. Thus, the antifouling coatings of the present invention can be more easily and cost effectively prepared than those which rely on the lotus effect.

A further difference between theses surfaces with a lotus effect described in the prior art and the antifouling coating of the present invention is dead, the later relies on a microstructure and elasticity of the surface material because of the resemblance of the shark skin while the surfaces in the prior art are required to exhibit are particular contact angle with water or other fluids, for which elastic properties may even be inappropriate.

In this context, especially the already mentioned parameters, flexibility, low surface energy and microstructure, were proved to be important for providing optimal antifouling properties, and since it was one major attempt of the present invention to prevent any adhesion of pollutants and especially of fouling organisms, respectively, in a preferred embodiment, the present invention relates to an antifouling coating, preferably comprising a non-polar surface.

It is known to the person skilled in the art that non-polar surfaces are only hardly and almost not, respectively, wettable, wherein less wetting correlates with high hydrophobicity of a surface. The higher the hydrophobicity of a surface, the less are its wetting properties and the less is the adhesion of any microorganisms to it. There exists a further correlation between wettability of a surface and the surface's energy, wherein, the surface energy is the lower, the less a surface is wettable. Therefore, objects having a low surface energy are thereby exhibiting interesting characteristics such as high and easy cleanability and providing only less adhesion for particles and organisms, respectively.

Hence, in one embodiment the present invention relates to an antifouling coating, wherein the antifouling coating comprises a low surface energy, preferably an antifouling coating, wherein the surface energy is about 20-25 mN/m, preferably > 20 mM/m. It has been observed that silicone-based adhesive layers exhibit low surface energies, because of which a settling on the substrate is made difficult. In studies by Berglin and Gatenholm, J. Adhesion Sci. Technol. 13(6) (1999), 713-727, the qualitative antifouling properties of the polydimethylsiloxanes (PDMS) have been shown to be a consequence of the low surface energy of the silicone substrate (20 - 25 mN·m⁻¹) and the deficiency of free chemical binding options connected therewith, representing the main factor for the failure of a permanent stable adhesive binding of the silicone with the cement of the barnacles. The average shearing tension, which is required for detaching adult barnacles from the silicone substrate was assessed as to be 0.5 x 10⁵ N·m⁻² and therefore one decimal power below the average shearing tension which was required for detaching animals from plexiglass (5 x 10⁵ N·m⁻²). Also the values determined by Yule and Walker, Barnacle Biology (ed: Southward, A.J.), Rotterdam (1987), 389-402, according to which adult animals resist to shearing tensions of about 9.3 x 10⁵ N·m⁻² were significantly undershot in the experiments using silicone rubber.

In the course of the experiments, especially the material was proved to be a crucial parameter, since on one hand it needs to be stable and robust while on the other hand it should be flexible, since elasticity (flexibility) of the material is necessary to provide improved antifouling properties, as will be demonstrated below.

Materials to be used for the production of an antifouling coating according to the present invention can comprise any material having at least in large part a hydrophobic surface and a surface with a low surface-energy, respectively, prior to its structuring. Those materials can comprise for example polytetrafluoroethylene, polytrifluoroethylene, polyvinylidene fluoride, polychlorotrifluoroethylene, polyhexafluoropropylene, poly(perfluoropropyleneoxide), poly(2,2,3,3-tetrafluoroxethane), poly(2,2-bis(trifluoromethyle)-4,5-difluoro-1,3-dioxole), poly(fluoroalkylacrylate), polyfluoroalkylmethacrylate, poly(vinylperfluoroalkylether) or any other polymer comprising perfluoralkoxy-compounds, poly(ethylene), poly(propylene), poly(isobutene), poly(isoprene), poly(4-methyl-1-pentene), poly(vinylalkanoates) and polyvinylmethylethers as homo- or copolymers.

The person skilled in the art will also recognize that any combination of polymers with for example additives can be used as long as the hydrophobic groups of the additives are mainly oriented towards the surface, thereby dominating the surface's chemical properties, i.e. rendering it hydrophobic.

In a preferred embodiment, the antifouling coating of the present invention comprises a polymer, preferably a synthetic polymer and more preferably, a polymer comprising silicon. In a particularly preferred embodiment, the polymer comprises silicone, preferably silicone rubber, more preferably, Polydimethylsiloxane (PDMS), and most preferably, soft silicone rubber, such as Elastosil^{®}M 4601. In the examples, silicone and PDMS, respectively, was chosen as basic material for the antifouling coating, since it comprises properties rendering it especially suitable for its use as antifouling coating, as silicone (PDMS) is non-toxic, which is obvious to those skilled in the art, for example as it is also used as material for artificial heart-valves in the medical sector.

Furthermore, its high casting quality due to its proper rheological properties makes it appropriate to be used as casting mass in the respective method and, since silicone and PDMS, respectively, provides fast vulcanization without shrinking, this guarantees the once adopted form to be stable and not to change in the course of vulcanization. Moreover, its high elasticity (hardness according to standard shore A = approximately 28) was proved to be one major characteristic for providing antifouling activity. However, another demand for successfully providing antifouling activity is the high resistance of silicone and PDMS, respectively, against tearing during mechanical load, since the antifouling coating of the present invention is intended to be applied *inter alia* to submarine objects in motion, because of which a certain resistance to the forces acting on those objects is necessary. Additionally, high long-term stability of the mechanical vulcanizate properties as well as low glass transition temperature, meaning maintaining its elasticity even at very low temperatures, renders silicone an appropriate material for the purposes of the present invention.

The silicone material used in the present invention comprises high resolution properties, i.e. can enter even very small pores and envelop even filigree surface structure elements. This property is the prerequisite to form the complement of the fine surface structures of "negative" matrices, used in the course of production of the antifouling coating, as will be described below and in detail in Example 1. Within the scope of the experiments performed in accordance with the present invention, six different surface types (i.e. the combination of two silicone materials with three different surface structures for each silicone type) were tested in view of their antifouling activity.

The person skilled in the art will recognize that the antifouling coating can of course also comprise other materials or combinations of materials, as long as they provide the above-described characteristics.

As can be seen from the above, the antifouling coating of the present invention is not to be understood as a rigid inflexible surface but rather as a functional system which by its motion and surface properties prevents from settling of organisms to substrates and furthermore it allows for self-cleaning of the surface from organisms, being already attached to it. Thus, the present invention describes for the first time the combination of low surface energy, flexibility and a microstructured surface topography for the use in an antifouling strategy without requiring any harmful, i.e. biocidal additives.

Hence, in contrast to the antifouling strategies of the prior art, the major advantage of the antifouling coating of the present invention is that it acts completely without chemical biocides of any kind, as the antifouling effect is based on purely physical principles and additionally, since the antifouling coating according to the present invention comprises only completely cross linked silicones, no subsequent escape of silicone oil has to be feared. In general, one further advantage beside the lack of any harmful agents of the antifouling coating according to the present invention, is that it is not used up during exerting its protection against fouling in contrast to for example antifouling strategies of the prior art using additional substances which are successively released into the aqueous medium and the antifouling effect of which ends when this substance is completely released from its carrier matrix. Therefore, in a particular preferred embodiment the antifouling coating of the present invention is substantially devoid of any compound or composition which is released either at once or successively to the environment, especially if the compound or composition consists of or comprises a biocidal agent and/or is substantially responsible for the antifouling effect.

A yet further advantage in contrast to chemical antifouling agents is that the time to be admitted to the market is assumed to be much shorter, since toxicity and potential environmentally damaging effects can be excluded, the extent of which consequently does not have to be assessed in further studies.

Within the present invention, one critical feature in the discovery of the antifouling activity of the antifouling coating provided by the present invention is the finding that a combination of the advantageous antifouling properties of silicone rubber with the antifouling activity of a regular surface topography like presented on the shark skin could significantly improve said properties, exceeding those provided by for example silicone without a microstructure.

In the course of the present invention, experiments were carried out in the North Sea, where barnacles (balanides and archaebalanides) are the most prominent fouling organisms and due to their size and the constant growth of their colonies one upon the other are mainly responsible for the above-mentioned problems due to fouling. Based on the knowledge of their settling behavior and a biological consideration of both, the properties and the originalities of this species, artificial surfaces based on the model of the shark's skin were produced and exposed to natural fouling conditions. These surfaces were provided with properties intended to render them an unattractive settling location for the barnacles' larvae; see also Examples 1 and 3, respectively.

In this context, it was especially surprising that the use of the antifouling coating according to the present invention led to a fouling reduction of about 67 % compared to the use of uncoated standards (see also Fig. 3), although all tests were conducted according to the Guidelines of international standards (ASTM D3623-78a (2004): Standard Test Method for Testing Antifouling Panels in Shallow Submergence) and which are classified as "static" tests, since the coated surfaces are exposed to relatively unruffled water.

The skilled person will easily recognize that "static" tests compared to "dynamic" tests clearly demand higher standards on an antifouling coating, since by the lack of water streams and constant environmental conditions the fouling organisms' adhesion to an object is facilitated. By contrast, in the course of "dynamic tests", the coated surfaces are located for example on ships in motion and thereby exposed to "dynamic" conditions such as shear forces surrounding the hull (due to both, movement of the hull through the water and wash of the waves), because of which an accelerated detachment of the fouling organisms and therefore a yet better reduction of fouling is assumed to be achieved.

As already mentioned before, the surface of the antifouling coating of the present invention unites a combination of the aforementioned characteristics which jointly exhibit superior antifouling properties rendering the coating useful as an antifouling coating for objects exposed to an aqueous medium. Without intending to be bound by theory, this effect is thought to be due to the specific surface topography (roughness) in combination with the flexibility of the material used, providing a settling substrate which is uncomfortable to fouling organisms and therefore rendering objects covered with this coating an unattractive substrate.

Furthermore, since the antifouling system provided by the present invention is based on the combination of three key parameters, as there are elasticity, microstructure and low surface energy, the combination of which does not only decrease the settlement of larvae and spores but due to its geometric properties also promotes a "self-cleaning" effect in case of yet settled organisms. During the experiments, the aforementioned parameters were varied in different combinations and it was found that the "right" choice of all of these three parameters was crucial to achieve the intended antifouling activity.

Special attention considering the choice of the surface material and its microstructuring was paid to the known biometric parameters of the settling organisms and their settling dynamics. Starting from the dimensions of the holdfast organs, the size of the larvae of *Balanus* and *Elminius,* the diameter of the cypridal cement drops as well as the knowledge of the chemical and mechanical relevant settling conditions, it was one major aspect of the present invention to provide an antifouling coating, presenting to the animals a combination of most unfavorable growth conditions.

As mentioned before and based on the observations considering the antifouling properties of a shark skin, it was found, that surfaces with a special topography are not infested by fouling organisms. Therefore, antifouling coatings of the present invention comprise a microstructured surface, wherein the microstructure comprises a regular microstructure and more, wherein the microstructure comprises a regular pattern of elevations and depressions.

In the course of microscopic analyses of the barnacle cement which was removed from a microstructured surface, it was surprisingly observed that the glue drops secreted by the barnacles only enter the structure up to a limited depth. Comparing the depth of penetration of the cured cement in the silicone film with the corresponding rill depth of the microstructured silicone (76 µm), it was surprisingly found that the fluent glue obviously is able to cast the silicone profile only to a depth of about 40 µm as a consequence of the low surface energy of the silicone, which is usually accompanied by a diminished wettability.

However, during the course of the experiments made in accordance with the present invention, concerning the dimensioning of the surface roughness, and especially concerning increased surface roughness of the settle substrate, it was surprisingly found that growth density significantly decreased when starting from the lowest and moving on to the highest surface roughness, being quite contradictory to the popular belief that rough surfaces are generally more settled than smooth ones.

Without intending to be bound by theory, in accordance with the present invention, this effect is thought to be due to the fact that with increasing surface roughness, for example of the different PDMS surfaces, also the spaces between the individual profile maxima increase, and as a consequence, the number of potential coupling options for a mechanic interaction between the cement layer and the microstructure decreases. Since the liquid protein glue is only able to enter the spacings of the surface roughnesses up to a certain depth, as mentioned before, the theory has to be discarded that an increased surface roughness necessarily increases the number of options of mechanical interactions between glue and substrate. To the contrary, the actual experiments support the idea of a cement layer wavelike spanning the roughness maxima but only up to a certain depth. Observations, according to which cyprid larvae have a tendency to detach from sharp-edged burred and strongly created surfaces support the present results; see Crisp and Barnes, J. Anim. Ecol. 23 (1954), 142-162.

Thus, during the course of experiments of the present invention unexpectedly best antifouling effect was observed when using a microstructured surface comprising a regular pattern of elevations and depressions, wherein the elevations comprise a height in the range of 40 - 450 µm, preferably a height of 45.2 µm, 64.6 µm, 73 µm, 76 µm or 152 µm and most preferably, wherein the elevations comprise a height of 152 µm.

The topography and the microstructure of a surface, respectively, is not only characterized by its elevations and depressions and their specific height, respectively, but is also characterized by the distance between each maximum value of two elevations and the deepest point of two profile grooves, i.e. depressions, respectively, referred to in the following as rill spacing.

Thus, in a further preferred embodiment of the antifouling coating of the present invention the elevations are spaced in the range of micrometers (µm), at intervals of 40-450 µm, preferably at intervals of 87.8 µm, 175.5 µm, 254 µm, 363 µm, or 410 um and most preferably at intervals of 175.5 µm.

The person skilled in the art will easily recognize that the design of a surface considering its surface topology and microstructure, respectively, can be easily adapted to certain applications requesting a specific ratio of height to spacing, for example and that, for some purposes a combination of different microstructures, i.e. different ratios of the height of elevation to rill spacing, representing the microstructure of an antifouling coating according to the present invention may be intended to be applied.

As already mentioned before, in the course of experiments beside preventing attachment of organisms, however, the antifouling coating according to the present invention unexpectedly exhibited also "self-cleaning" properties allowing the surface to dispose of probably already settled organisms, since on closer inspection of an almost unsettled silicone surfaces, investigated in the course of the experiments, surprisingly accumulations of circular smooth areas were found, which were not slightly polluted as the remaining plate surface (see Fig. 4) indicating that animals have formerly settled there but were removed by "self-cleaning" of the silicone coating.

Without intending to be bound by theory, this "self-cleaning" is thought to be due to the elastic properties of the silicone rubber, since with increasing age and mass of the barnacles they reach a critical time point at which water streams and gravities acting on the barnacles exceed the already weak adhesion forces between the substrate (silicone) and the cement. Due to the flexibility of the silicone, i.e. the movement of the elevations of the microstructure of the antifouling coating of the present invention, towards and against each other, the antifouling coating induces additional forces and tensions, respectively, tearing and finally exceeding the adhesion of the barnacle's cement to the silicone surface. Thus, the "self-cleaning" property of the silicone rubber is not only due to its low surface energy, but rather also due to the elastic-flexible deformability of its structure.

As found during microscopic analyses of basal plates of the barnacles, they surprisingly proved not to be identical negative copies of the silicone structures, but rather showed a casted profile having irregularly wavy lined minima and maxima, the geometrical impreciseness of which is a consequence of elastic deformation in the silicone rubber's rill structure; see also Fig. 5.

The person skilled in the art will easily understand that the deformation of the silicone structure, for example silicone ribs, can either be due to mechanical load for example by three-dimensional deformation of the cement, secreted by the barnacles itself, during the crosslinking process of the protein components; or due to the radial growth of the basal plate and the batch-wise expansion of the calcareous side plates; or even the silicone ribs of an individual surface segment are already deformed prior to the first settlement, for example by the radial growth of one or more neighboring individuals.

As already mentioned before, coatings and surfaces, respectively according to the present invention can be produced starting with materials having hydrophilic properties and a low surface energy and a hydrophobic surface, respectively, prior to the application of the microstructure.

As will be known to the person skilled in the art, there exist several -methods to apply a microstructure to a polymer comprising for example mechanical imprinting, lithographical methods or casting techniques.

Thus, in one embodiment, the antifouling coating of the present invention is microstructured by use of a casting mold, i.e. a "negative" and imprinting the microstructure onto the coating during the production of the same. By using this casting method, the antifouling coating, i.e. the polymer in its viscous form is applied to a casting matrix ("negative") and in the course of curing is allowed to adopt a microstructure complementary to that of the "negative" from which it can be easily detached; see Example 1 and Fig. 1.

Therefore, in one preferred embodiment, the method of producing an elastic anti-fouling coating in accordance with the present invention comprises:
(a) subjecting a flexible polymer to a microstructured template;
(b) allowing the polymer to form a microstructured surface which is complementary to that of the template; and
(c) obtaining the product resulting from step (b).

In a still more preferred embodiment, the aforementioned method comprises:
(a) providing a microstructured template;
(b) adjusting/fixing the template flatly;
(c) applying a ready-to-pour polymer to the template;
(d) curing the polymer on the template; and
(e) removing the cured polymer from the template.

Although in the context of the present invention the casting matrices ("negatives") comprised special films such as riblet film or lenticular film (see Example 1 and Fig. 1), respectively, however, any other casting matrix can be used providing an appropriate "negative" of the surface roughness profile which is intended to be found on the final coating (the "positive").

Depending on the microstructure intended to be presented on the final coating, the matrix and the casting mold, respectively, can be varied concerning several parameters such as thickness, size, structure, wherein those parameters may also be combined. Furthermore, in view of the dimensions of the casting mold used, the person skilled in the art will easily understand that depending on for example the size and thickness, intended for the final coating, the mold must be designed to allow for its formation, i.e. in case a thick coating is intended, the casting mold should comprise the corresponding height.

Alternatively, the microstructure can be applied to the antifouling coating by a casting method comprising the pre-treatment of a surface which is intended to be coated with a primer, followed by the direct application of viscous silicone rubber there onto, wherein subsequently the shaping matrix (the "negative") is fixed above but contacting the viscous silicone rubber, thereby imprinting its structure onto the curing mass, and is removed after the cross-linking of the silicone components is completed.

Since the antifouling coatings obtained by those methods necessarily exhibit the advantageous antifouling properties due to the inventive combination of the above-mentioned physical parameters and the respective methods based thereon, in a further embodiment, the present invention relates to an antifouling coating, obtainable by the methods described above.

Instead of a planar matrix which is as described above contacted in one or more pieces, but preferably in one piece to the silicone, it is also conceivable to use a roller having a microstructured surface, the complement of which is intended to be imprinted onto the silicone and which is rolled over the silicone mass while it is still viscous. Since the silicone's velocity of cross-linking is strongly depending on the type of silicone as well as the environmental temperature, the person skilled in the art knows well how to influence the curing time, i.e. the temperature which needs to be applied to the silicone type used to ensure that the structure once imprinted by the roller remains stable after the "negative", i.e. the surface of the roller has moved on and not to collapse due to not being cured fast enough. The harmonization of the silicone-type with the temperature may either be provided by heating the environment in which the microstructure is applied up to the intended temperature/the temperature required, or by for example by the use of a heated roller. In doing so, an exact coordination of the imprinting and curing process would be possible to guarantee that the silicone mass cures immediately after the microstructure is rolled onto it to avoid the loss of the imprinted structure due to too slow curing of the polymer.

In accordance with the present invention, the antifouling effect provided by a microstructure comprising for example a rill-like shape, can also be achieved by an antifouling coating having randomized distributed unevennesses. Antifouling coatings with this kind of microstructure can especially be applied to objects where a hydrodynamically favoring effect of a rill structure is not required. In this context, possible application fields could be for example pontoons, bulkheads, concrete foundations of off-shore wind parks, "floating houses", and the like.

The above mentioned, i.e. randomly distributed unevenesses, can be applied to a coating for example by using additive particles of a defined size which are added to the yet fluid silicone rubber in a certain ratio, forming a randomized surface structure during the curing process. In one embodiment, those additives comprise pellets of expanded glass, i.e. glass granulates, such as provided by poraver®, having a diameter of 4 to 125 µm, more preferably 0.04 to 0.125 mm, but the person skilled in the art will easily recognize that any appropriate particle, i.e. microparticle does, as long as it fulfills the intended parameters regarding the quality of the surface microstructures produced by the afore-mentioned method as well as their mechanical properties. The preparation of the antifouling coating according to this embodiment and described in detail in Example 3 is particularly advantageous, since it allows its easy application by simply painting it onto objects. Thus, in a particular preferred embodiment the present invention relates to a method of producing an antifouling coating as defined hereinbefore, with a microstructure between 40 µm and 450 µm, wherein said method comprises
(a) providing a liquid polymer as defined above, preferably silicone rubber;
(b) adding microparticles, preferably glass granulates having a diameter of up to 125 µm;
(c) applying the liquid polymer on an object; and
(d) curing the polymer on the object.
Preferably said microparticle is a glass granulate such as poraver® (Dennert Poraver GmbH, Schlusselfeld, Germany); see the product specification of poraver® glass granulates according to DIN EN 13055-1. Most preferably said grass granulates or equivalent additives have a size of 0.04 to 0.125 mm. In this embodiment, as described in detail in Example 3, the glass granulates are preferably used in a ratio of 1 to 12, for example 8.3 g glass granulates to 100 g silicone mixture.

Furthermore, depending on the intended use, further additives may be added to the liquid polymer during the method of preparing the antifouling coating of the present invention, for example additives for influencing the viscosity, pot time and/or elasticity as described further below and in the Examples. Naturally, the present invention also extends to the antifouling coatings obtained by any of the methods of the present invention as well as to objects painted therewith.

There are several properties of the liquid polymer such as silicone rubber mass and antifouling coating, respectively, such as pot time, viscosity, elasticity which can be affected and modulated by for example applying additives such as thickeners, thinners, catalyzers or inhibitors. In this context, the addition of a thickener may be particularly advantageous when the coating is intended to be applied to vertical surfaces such as hull planking leading to an improved handling of the material and avoiding the antifouling coating to "flow" down, wherein, the more thickener is added to the silicone rubber mass (either comprising further added microparticles or not), the thicker the mixture is going to be. For the above-referenced purpose several thickeners are known in the art such as Thixotropic Additive M and Stabilizer 43 (WACKER SILICONES, Wacker-Chemie AG).

However, if it is intended to increase the fluidity and flowability, respectively, of the silicone rubber mass, a thinner may be added, which affects the viscosity of the silicone mixture, i.e. renders the mixture more fluent as described in detail in Example 3. In this context, the amount of the thinner to be added to the silicone mixture depends on the method according to which the microstructured antifouling coating of the present invention is prepared. In particular, when the antifouling coating is prepared according to the "imprinting" method as described in detail in Example 1, the "basic" and yet fluid silicone rubber mixture per se is more fluent than, for example, the silicone rubber mass comprising microparticles such as glass granulates, in case the antifouling coating is prepared according to the method described in detail in Example 3. Thus, depending on the method of preparation, the amount of thinner to be added to the silicone rubber mass may vary and depend on the intended "end-fluidity" and "end-viscosity", respectively, of the mixture. Although several thinners for the above-referenced purpose may be used such as benzine, the thinner preferably used in accordance with the present invention, was acetone.

In another embodiment, when considering for example modulation of the vulcanization time and pot time, respectively, of the polymer, preferably silicone rubber mass, compounds may be added for the acceleration or deceleration of the cross-linking time. In this context, it is known that compounds added for accelarating cross-linking, i.e. catalyzers, increase the reactivity of the cross-linking basic material (silicone rubber mixture) leading to a shortened pot time, i.e. the time in which processing of the material is possible as well as to a shortened vulcanization time, i.e., the time in which the vulcanisate at the respective temperature has reached at least 75 % of the final hardness. On the other hand, addition of an inhibitor decreases the cross-linking process and thereby extends pot time and vulcanization time, respectively. There are several catalyzers and inhibitors known in the art which may be also used according to the present invention such as catalyzer "EP" and inhibitor "PT 88" (WACKER SILICONES; Wacker-Chemie AG).

Furthermore, elasticity as another property of the completely cured and cross-linked antifouling coating, i.e., the end product may be affected for example by varying the weight ratio between silicone rubber and cross-linker during the mixing process of the components. Thus, for example mechanical stability and hardness, respectively, of the coating may be modulated, in case special applications are intended such as applying the coating to different parts of an object, wherein the applied antifouling coating is unequally stressed for example due to different water stream when applied to the bow of a ship compared to the flanks.

However, for embodiments of the method of preparing the non-toxic antifouling coating of the present invention a respective casting mold and negative matrix, respectively, is recommended which can either be provided by using matrices having already the intended "negative" surface structure or can easily be prepared by techniques known to those skilled in the art such as microlithography, etching-methods, laser-methods and the like.

In a preferred embodiment of the present invention, the negative-mold is provided by the use of specialized films exhibiting the microstructured surface intended to be applied to the silicone mass; see Example 1 and Fig. 1 (a), (c), (e) leading to a microstructure of the "positive" having elevations comprising the aforementioned preferred dimensions.

Microstructures, as will be recognized by the skilled person can be applied to the silicone either simultaneously at the same time or successively either by mechanical imprinting, lithographical methods or casting techniques.

Furthermore, the microstructure can be applied to a basically smooth surface and as a consequence leading to a coating on which it represents the only structure, but in another embodiment the microstructure can also be applied to a surface which is already roughly pre-textured prior to the application of the microstructure. The aforementioned "double-structuring" may be useful for certain applications, since it can confer certain properties to the coating such as for example higher mechanical toughness.

However, those skilled in the art will easily recognize that alternatively the production of an antifouling coating of the present invention can also in a first step comprise the application of the microstructure to an appropriate material such as silicone, which is in a subsequently step provided with a hydrophobic surface and a low surface energy, respectively. Therefore, the skilled artisan will understand that the hydrophobic properties and the low surface energy, respectively, can be conferred to the material after the microstructure has already been applied, for example by way of coating the elevations of the applied microstructure with a material conferring the respective hydrophilic properties and low surface energy to the material.

Therefore, i.e. for the modification of the very outer surface of the material after the microstructure has been applied, and more precisely, to render it the already microstructured material hydrophobic, any compound comprising hydrophobic groups can be used and methods of conferring corresponding properties to the coating are well known to the skilled artisan comprising for example covalent bonding of monomers or oligomers to the outer surface of the coating, either to the whole surface or to parts thereof (for example to the elevations of the already applied microstructure) by chemical reaction also well known to those skilled in the art.

Furthermore, a method is conceivable comprising for example applying the hydrophilic characteristics to the already structured material by generating radicals on the very outer surface of the material (for example on the elevations) in a first step which in a second step react with radically polymerizable monomers depending on the presence or absence of oxygen; or the already microstructured material can be conferred with hydrophobic properties by covering it with hydrophobic polymers either by way of a varnish or by polymerization of respective monomers on the coating's outer surface.

Although the present invention also generally refers to methods of producing objects with a surface having antifouling properties, in a further embodiment, the invention relates to a method of producing an object with a surface having improved antifouling properties, comprising:
(a) pretreating the surface of an object with a primer onto which the polymer is intended to be applied;
(b) applying a liquid polymer to the pretreated surface;
(c) adjusting a microstructured template onto the liquid polymer, imprinting the image of its surface on the polymer;
(d) curing the polymer while the template is adjusted; and
(e) removing the template from the cured polymer.

Furthermore, the present invention relates to an object comprising an antifouling coating or an exposed surface as described above, preferably, wherein the adherence of the antifouling coating onto the object is supported by a primer such as G 795.

Primers appropriate to be used for supplying adherence of the antifouling coating of the present invention to an object will be easily recognized by those skilled in the art and can generally comprise any primer having the respective and required, respectively, properties. Those primers can comprise for example isoalkanes, aminoethylaminopropyltrimethoxysilanes, reactive siloxanes and amorphous silica and are commercially available by numerous companies such as Wacker-Chemie GmbH (Germany) or Dow Corning (USA).

Besides the production of an antifouling coating to be applied onto an object thereby conferring antifouling properties to the object, i.e. protecting said object against fouling, the person skilled in the art will easily recognize that the microstructure itself, however, can also directly be applied to an object, for example in the course of the macroscopic production of said object. According to the present invention, the material of this object preferably comprises a polymer as already defined such as silicone. In another embodiment, if the material of the object does not comprise a corresponding polymer, however, after producing said object and simultaneously applying the structure to it, the polymer (such as silicone) can be applied to the object after said object has been produced and microstructured in the course of its production.

According to the above, the present invention relates to an object having an exposed surface, wherein the exposed surface comprises a microstructure consisting essentially of elevations and depressions, wherein
(i) distances between elevations are about 40 - 450 µm;
(ii) heights of said elevations are 152 µm;
(iii) elevations are made of elastic polymers;
(iv) the surface has a surface energy of about 20 to 25 mN/m, preferably higher than 20 mN/m; and
(v) the exposed surface displays a reduced adhesion of marine organisms upon exposure to water compaired to a non-microstructured surface,
as well as to an object obtainable by any of the methods described above, preferably, wherein the surface of the object is permanently exposed to an aqueous medium.

Since nearly any object, exposed to and immersed in an aqueous medium, respectively, is endangered to be infested by organic growth, irrespective of its material, the present invention relates to objects comprising any surface onto which the antifouling coating is applicable. In a preferred embodiment, the present invention relates to an object either comprising the antifouling coating of the present invention or obtainable by any one of the aforementioned methods, wherein the object comprises steel, wood, aluminum, glass, natural stone, cement, plastic, concrete, or compositions thereof.

As already discussed with the features of the antifouling coating provided by the present invention as well as with the methods of its production it is evident that, especially in view of its large scale production, devices are required to enable an automated, fast and reproducible production of the antifouling coatings. Those devices may comprise a set of units such as a holder for casting mold, an exchange-unit for changing casting matrices, or a set of casting matrices providing "negatives" of the structures intended to be applied to the polymeric mass. Depending on the production method intended to be used, those devices my further comprise delivery pipes to feed and drain off, respectively, for example the fluent polymeric mass, further a heating unit or more general a unit for temperature control, a supply for the additives to be fed, and the like. Those skilled in the art will know the demands on such devices and its appropriate units. Thus, in a further embodiment the present invention relates to an apparatus or device for producing the antifouling coating of the invention or for use in the described methods.

Indeed, because of the advantageous properties of the antifouling coating of the present invention, it can be generally applied to any object which is exposed to an aqueous medium and especially with respect to its non-toxicity, it can be applied to objects which are either directly or indirectly in contact with humans, such as objects used in the food industry, in hospitals, in sanitary areas, or the like. A non limiting selection of further application fields in which the subject matter of the present invention can be used is set forth, below.

According to the above, the antifouling coating provided by the present invention can find use not only in the commercial navigation or the pleasure craft sector but also rather in various sectors, since there is a broad field of its implementation. In this context, there exist numerous industries, the processes of which are extremely interfered with organic fouling such as breweries, the milk-processing industry, paper mills, power plants (heat exchangers and cooling plants), sensor systems (such as tsunami early warning systems) and the like.

Thus, one important further application concerns the food industry, since within the food technology (for example milk processing factories, breweries and the like), the problem of biofilm production causing a high economical loss is much more difficult, since the hard accessibility of the inner surfaces of tanks and pipings requires the use of toxic agents for reduction of the biofilms; see Verran, J., Food and Bioprod. Process 80 (C4) (2002), 292-298. These toxins subsequently have to be neutralized in an extremely laborious and cost-intensive process, thereby still remaining a risk to human health.

Another industry afflicted with the problem of foulingis the paper industry, since there are analogous problems within the pipings, where the mash of cellulose used during paper manufacture provides optimal living conditions for microorganisms of any kind, such conditions being for example high humidity, heat, sufficient organic substrate as well as no interference with other organisms. Paper mills are therefore well referred to as "uncontrolled bioreactors". Additionally, strict legal conditions for the reduction of dioxin content require closed water circulation during paper manufacture, causing an increase of uncontrolled fouling within these circulations a problem of which can be solved by applying the antifouling coating of the present invention to those pipings; see *inter alia* Klahre and Flemming, Water Res. 34 (14) (2000), 3657-3665; Mattila et al., J. Ind. Micr. and Biotech. 28 (5) (2002), 268-279.

Furthermore, heat exchanger and cooling systems in for example power stations are particularly endangered by biofouling, since in case of a malfunction it does not only cause a commercially loss but can also lead to threatening consequences. Therefore, in tube feeders of heat exchangers and industrial cooling systems, the biofouling problem is not minor complex, since they are usually supplied with water of lakes and rivers, a problem which applies to water treatment plants as well as desalting plants. In case of insufficient previous sterilisation of the fed water, the organisms do not only cause formation of microbial biofilms, but also the larvae of macrofoulers (for example certain mussel species such as zebra mussels and quagga mussels) are brought into the pipings, where they find favorable living conditions and, as a consequence, within a few weeks the pipes are completely blocked by the growing organisms. Besides the cost-intensive cleaning procedures, and perhaps even more important than that, there is the danger of substantial malfunctions of the afflicted plant, caused by inadequately provided cooling systems; see *inter alia* Melo and Bott, Exp. Them. and Fluid Sci. 14 (4) (1997), 375-381; Lee et al., Kor. J. Chem. Engin. 15 (1) (1998), 71-77; Azis et al., Desalination 135 (1-3) (2001), 69-82 Sp. Iss. SI; Flemming, H.C., Appl. Microb. Biotech. 59 (6) (2002), 629-640; Brizzolara et al, Biofouling 19 (1) (2003), 19-35; Cloete, T.E., Mat. and Corr. 54 (7) (2003), 520-526.

The same applies to sensor systems, since both, in the maritime as well as the non-maritime context the plurality of different sensors is especially affected by fouling. For example, sensors are lowered for monitoring and ensuring respectively the failure-free course of different processes (for example food and paper industry) or for taking over environmental monitoring up to operational involvement in global early warning systems (maritime industry). Especially sensors lowered to the sea often lose their ability to operate already after a few weeks due to fouling by different organisms, the consequences of which can be dramatic; see for example Flemming et al., Water Sci. and Techn. 38 (8-9) (1998), 291-298; Flemming, H.C., Water Sci. and Techn. 47 (5) (2003), 1-8. Therefore, in particular, in these fields, suitable protection mechanisms and surface treatment, respectively, are urgently required.

From the above, it will be appreciated that the present invention generally relates to antifouling coatings and their use in a plurality of applications, because of which in another preferred embodiment, the present invention relates to the use of the antifouling coating for the protection of surfaces of objects against fouling or for reducing adhesion of marine organisms, preferably, wherein the object or surface comprises submarine structures or constructs, the inner surface of reservoirs and pipings such as used in food or paper industry, in power stations, waste water treatment plants, desalting plants, or the like.

Accordingly, in a special preferred embodiment, the present invention relates to an object comprising the antifouling coating of the present invention obtainable by any of the aforementioned methods, wherein the object is selected from the group consisting of ships, subaqueous substrates, boats, sea tons, stones, basins, offshore platforms, measuring instruments, sensors such as tsunami early warning system, footbridges, navigation marks, hulls, docks, pipes, artificial subaqueous constructs, seawater equipment, floating homes, houseboats, oil platforms, or the like.

Due to the very complex field of antifouling strategies and the general infestation of surfaces exposed to an aqueous medium it is conceivable to the person skilled in the art that sometimes combinations of different antifouling strategies such as different coatings or even the combination of coatings and paintings may be necessary. Therefore, in another preferred embodiment, the present invention relates to coating compositions comprising the antifouling coating of the present invention or obtainable by the methods of the present invention.

It will be apparent that the antifouling coating, compositions comprising it, methods of its production, and uses as substantially described herein or illustrated in the description and the examples, are also subject of the present invention and claimed herewith. In this respect, it is also understood that the embodiments as described in any one of the examples, can be independently used and combined with any one of the embodiments described hereinbefore and claimed in the appended claims set.

These and other embodiments are disclosed and encompassed by the description and examples of the present invention. Further literature concerning any one of the materials, methods, uses and compounds to be employed in accordance with the present invention may be retrieved from public libraries and databases, using for example electronic devices. For example the public database "Medline" may be utilized, which is hosted by the National Center for Biotechnology Information and/or the National Library of Medicine at the National Institutes of Health. Further databases and web addresses, such as those of the European Bioinformatics Institute (EBI), which is part of the European Molecular Biology Laboratory (EMBL) are known to the person skilled in the art and can also be obtained using internet search engines. An overview of patent information in biotechnology and a survey of relevant sources of patent information useful for retrospective searching and for current awareness is given in Berks, TIBTECH 12 (1994), 352-364.

The above disclosure generally describes the present invention. Several documents are cited throughout the text of this specification. Full bibliographic citations may be found at the end of the specification immediately preceding the claims.

The above disclosure generally describes the present invention. A more complete understanding can be obtained by reference to the following specific examples which are provided herein for purposes of illustration only and are not intended to limit the scope of the invention.

### EXAMPLES

The examples which follow further illustrate the invention, but should not be construed to limit the scope of the invention in any way.

### Example 1: Production of the antifouling coatings (test surfaces) comprising silicone

The test surfaces (coatings) of the present invention are based on the model of the shark skin and were prepared, having different elasticity, microtopography and free surface energy to investigate the antifouling properties of these different feature combinations.

As standard test surface carriers, plates made of PVC in the dimension of 240 mm x 200 mm x 4 mm were used. Thereon the actual test surfaces in the dimension of 200 mm x 200 mm were applied. For digital image analysis, any settled organisms within 0.5 inch (~ 1.27 cm) from all edges of the test panel were discarded to minimize interfering side effects.,

The term "surface microstructure", as defined in section "definitions", is defined by the technically standardized unit of the "averaged surface roughness depth (peak-to-valley height) R_{Z}". It was calculated according to Matek *et al.*, from the arithmetic mean value of a number (mostly 5) of individual surface roughness depths within a reference distance; see Matek et al., Maschienenelemente, 15. durchgesehene Auflage, Friedr. Vieweg & Sohne Verlagsgesellschaft mbH, Braunschweig/Wiesbaden (2001). Within this calculation, the computation base for the averaged surface roughness depth R_{Z} of a microstructured substrate surface is a reference distance lₘ which is subdivided into a number of equally spaced segments (l_{m/5}). The averaged surface roughness depth R_{Z} is the quotient of the sum of the individual surface roughness depths (z₁ + z₂ + ... + z₅) and the total number of segments.

Silicone test surfaces were produced according to the method described below. The material and surface properties of the individual test samples will be further characterized in the following.

### (i) Preparation of the casting molds (casting matrices; negative molds)

During an imprinting process the antifouling coating was casted from "negatives" and matrices, respectively, which are obtainable from different suppliers. As casting matrices, so-called riblet films (company: 3M; material: PVDF = polyvenylidenefluoride; Fig. 1(c)) and lenticular films (company: LPC Europe, Dublin; material: APET, PETG = polyester; Fig. 1(e)), respectively, were used, the casts of which differ in their profile geometry. For the preparation of the casting molds, the above mentioned films were used having the following rill spacing.
▪ Riblet film: 87.8 µm, 175.5 µm
▪ Lenticular film: 254 µm, 363 µm, 410 µm

Therefore, surface elements of the microstructured special film comprising the intended surface roughness depth in the dimension of 200 mm x 200 mm x 4 mm were cut to size and stuck into plastic molds consisting of commercially available PVC having a corresponding dimension. Only for the zero control (unstructured surface), no film was put into the mold, resulting in a smooth coating without any microstructure.

### (ii) Production of the antifouling coating comprising silicone (PDMS) using special films as casting matrix

For the production of the silicone surfaces, two different types of crosslinking polydimethylsiloxanes (PDMS) were used. The first type of silicone (Eastosil® M4601, Wacker-Chemie GmbH) is a soft, elastic material (Shore A degree of hardness 28 according to ISO 867) with a surface energy of 22-25 mN/m (manufacture's data). It is an adding cross-linking two-component silicone rubber, the components of which after mixture in the ratio of 9:1 (rubber:cross-linker) cure within 12 hours at room temperature. The second type of silicone (Elastosil® M4641, Wacker-Chemie GmbH) consists of harder and less elastic material (Shore A degree of hardness 43) but having the same surface energy.

The silicone surfaces of these two types (PDMS "soft" and PDMS "medium", respectively,) were provided with an averaged surface roughness depth of 0 µm, 76 µm and 152 µm using a casting method and for each roughness grade six test plates were produced, by a process comprising the following steps:
(1) Preparing the casting matrix, i.e. cleaning and degreasing of the riblet and lenticular film, respectively, by using compressed air and acetone.
(2) Fixing the matrix onto a planar surface to avoid waving during the casting.
(3) Preparing the casting mass, i.e. well mixing of the individual components of the respective silicone rubber (polydimethylsiloxane) with the hardener in the exact ratio. Insufficient mixing or an imbalanced ratio of the components may cause the silicone not completely to cure and additionally, smeary areas on the surface or within the layer may be formed which negatively influence the antifouling properties as well as the mechanical stability.
(4) Degassing the mixture in vacuum (for example exsiccator) to prevent any enclosure of blisters in the silicone mass.
(5) Applying (pouring) the viscous silicone mass into the previously prepared casting molds, i.e. onto the matrix and its even distribution using a scraper, a process during which it is crucial to process the mass within 1½ hours, since the advancing cross-linking of the components may otherwise cause a decrease of casting accuracy. The plastic plates with the microstructured films stuck onto were covered with a layer of silicone mass of about 3 mm, for which about 120 g fluent silicone per casting mold were necessary.
(6) Detaching the silicone layer after about 12 hours of cross-linking from the negative mold, exhibiting a microstructure which is highly accurate complementary to that of the special film, which was used as the "negative"; see also Fig 1c-f.

### Example 2: Application of the antifouling coating to objects and surfaces of objects, respectively

After casting and curing the silicone, it is ready to be applied onto various objects and their surface types, respectively, (such as hulls made of aluminum, steel or wood) by for example using so called primers (adhesive agents, such as priming G 795, Wacker-Chemie GmbH). Therefore, the silicone which was cured over night, on the following day detached as a thin layer from the casting mold and fixed to a carrier plate and fixed to a carrier plate, which previously has been coated with a primer film. The liquid primer can either be applied with a brush or by an air-less spraying method, as commonly used in ship yards for painting hulls. The primer should be allowed to dry overnight before the microstructured silicone film is applied. To ensure a strong adhesion between those two layers, the microstructured silicone has to be coated on its smooth side with a thin film of liquid, non-crosslinked silicone of the same kind before applying the coating layer to the carrier plate. As a second possible method, the primer itself can be coated with a liquid silicone film before applying the microstructured silicone layer directly on top of it.

### Example 3: Production of the anti-fouling coating comprising the addition of additives such as microparticles.

For the production of microstructured silicone-surfaces, generally the types of silicone as already described in Example 1 (ii), i.e. ELASTOSIL^{®} M4601 and ELASTOSIL^{®} M4641, (WACKER SILICONES, Wacker-Chemie GmbH), respectively, were used. Particles of a defined size, preferably pellets of expanded glass, i.e. glass granulates, such as provided by poraver^{®} with a diameter of between 40 µm and 125 µm, were added to the fluid silicone mass in a weight ratio of 1:12, i.e. 8.3 g pellets of expanded glass to 100 g silicone mixture. This mixture ratio allowed the formation of the desired microstructure of between 40 µm and 450 µm during the cross-linking process, which afterwards was easy to apply to and "paint" on, respectively, the object.

When performing the methods of the different present invention, different parameters such as viscosity and their respective impact on the silicone rubber mass and antifouling coating, respectively, were tested.

### Modification of viscositv

Viscosity and flowability, respectively, of the silicone rubber mixture was modulated by the addition of a thinner. In particular, acetone as thinner was added to the ready mixed silicone rubber mass in an amount of 10 to 30 % (w/w). Thereby, the viscosity of the silicone rubber mass which according to Brookfield was about 25.000 centipoises (cp) (mPa x s) could be adjusted to a viscosity of nearly 3.600 cp, which corresponds to a viscosity of commercially used ship paint. When performing the experiment, it turned out that the "starting" viscosity of the silicone rubber mass, i.e. the viscosity of the ready-mixed silicone rubber mixture without any further additives, was dependent on whether it comprised microparticles such as glass granulates (in case of preparing the antifouling coating according to the method described in detail in actual Example 3) or not (in case of preparing the antifouling coating according to the method described in detail in Example 1). In case the silicone rubber mass did comprise glass granulates, the mixture automatically was thicker, and therefore to achieve the same "end-viscosity" and "end-fluidity", respectively, more thinner had to be added compared to a silicone rubber mixture not comprising glass granulates.

### Example 4: Exposure of the antifouling coatings to seawater

The antifouling coatings of the present invention comprising an "artificial" shark skin were analyzed in field tests in the North Sea in a marina in the Meldorf Bay (Dithmarscher Land, Schleswig-Holstein) during the months of the highest barnacle larvae density. The research approach was directed to the investigation of the growth of the two marine macro fouling species *Balanus crenatus* and *Elminius modestus* as a function of microtopography, elasticity and surface energy of the substrate's surface.

For the time period of the field assays, the test plates, coated with the antifouling coatings according to the present invention, were exposed to the sea under real fouling conditions, i.e. exposed to overgrowth by barnacles, algae, mussels and biofilms by lowering them at a landing stage Meldorf marina (N 54°5'25" E 9°4°15") which is provided with a constant seawater afflux from the North Sea. During the months of summer, the ships lying there at anchor were exposed to a strong fouling pressure by barnacles since the time period of the plates' exposure to seawater was within the breeding season of the barnacles, and therefore, during these months the water's cyprid larvae concentration was very high.

Five individual test plates each were fixed together at one rail mounting and lowered to a water depth of 1 m. At the same time, a data logger was installed at the landing stage, recording temperature, salinity, pH value and oxygen content of the seawater every minute via sensors. As already mentioned in the description, all tests were conducted according to the Guidelines of international standards (ASTM D3623-78a (2004): Standard Test Method for Testing Antifouling Panels in Shallow Submergence).

After lowering the test plates to the test area, in regular time intervals, inspection trips were made. During these trips, readout of the data logger, mounting check of the plates, photographical documentation of fouling so far and extraction of a sample of water for the determination of the actual cyprid larvae concentration in the bay was conducted. After the plates have been exposed to seawater for a time period of about three months, all plates of the test area were reeled in and transferred to laboratory for further analysis.

### Example 5: Analysis

As evaluation standard for the qualitative antifouling properties of a surface, the percentage overgrowth of a surface area was calculated using digital picture analysis and afterwards the dry mass was determined for each individual test plate.

Therefore, at the end of the test period, the plate frames were reeled in from the seawater, and the test plates were carefully removed from the mounting device. This was followed by a drying period of 10 days, comprising exposure to air, in which especially the tissue fluids should volatilize from the barnacles' mantle cavities.

For assessment of the antifouling efficacy of the individual surface types, two common methods, i.e. assessment of the dry mass and measuring of the growth density were used. To evaluate the growth density, each test plate was photographed using a digital camera and evaluated via computer-assisted picture analysis. For this purpose, the Java-based program ImageJ (http://rsb.info.nih.gov/ij/) was used, within which, the photographs of each individual test plate (resolution: 2272 x 1704 pixel) were opened and the reference standard was determined by means of a scale bar (length: 200 mm), which has been photographed together with the plate. A surrounded area in number of pixels was thereby converted into a defined area (mm²) and put into a percent proportion to the total area of the test plate. The values were converted into a bar graph; see also Fig. 3(a) and (b), respectively.

For the assessment of the dry mass, the overgrowth within the limits of the test coating was carefully scraped off and its mass was assessed using an analytical balance. Afterwards, the density of overgrowth by barnacles was assessed. Growth density, being the percentage of the overgrown area in relation to the total area of the test plate is given in [%]. The percentage of growth density is a common standard for quantification of fouling and therefore also serves as criterion for the antifouling quality of a surface. For each individual surface type, the dry masses were determined; see also Fig. 3.

For each individual surface type, the dry masses given in [g] are shown in Fig. 3(a) and the average growth densities are given in Fig. 3(b). To elucidate the partially strong distinct differences in fouling of different test surfaces, exemplarily two test plates are compared; see Fig. 2.

## Claims

1. A non-toxic antifouling coating comprising a polymer comprising polydimethylsiloxane (PDMS), having a surface energy of about 20 - 25 mN/m and comprising a surface which is microstructured and elastic, wherein the microstructure comprises a regular or randomly distributed pattern of elevations and depressions, **characterized in that** R_{z}= 152 µm.

2. non-toxic antifouling coating of claim 1, wherein the polymer comprises soft silicone rubber.

3. non-toxic antifouling coating of claim 2, wherein the soft silicone has a hardness (Shore A) of 28.

4. Antifouling coating of claim 1, wherein the elevations are spaced at intervals of 40 - 450 µm, preferably 87.8 µm, 175.5 µm, 254 µm, 363 µm or 410 µm.

5. A method of producing the elastic antifouling coating of any one of claims 1 to 4 comprising:
(a) subjecting a flexible polymer as defined in any one of claims 1 to 3 to a microstructured template;
(b) allowing the polymer to form a microstructured surface which is complementary to that of the template; and
(c) obtaining the product resulting from step (b).

6. The method of claim 5, comprising:
(a) providing a microstructured template;
(b) adjusting/fixing the template flatly;
(c) providing a ready-to-pour polymer;
(d) applying the liquid polymer to the template;
(e) curing the polymer on the template; and
(f) removing the cured polymer from the template.

7. An object comprising an antifouling coating of any one of claims 1 to 4.

8. The object of claim 7, wherein the adherence of the antifouling coating onto the object is supported by a primer.

9. The object of any one of claims 7 to 8 having an exposed surface, wherein the exposed surface comprises a microstructure consisting essentially of elevations and depressions, wherein
(i) distances between elevations are about 40 - 450 µm;
(ii) heights of said elevations are 152 µm;
(iii) elevations are made of elastic polymers as defined in any one of claims 3 to 6;
(iv) the surface has a surface energy of about 20 to 25 mN/m; and
(v) the exposed surface displays a reduced adhesion of marine organisms upon exposure to water compared to a non-microstructured surface.

10. A method of producing an object of any one of claims 7 to 9, comprising:
(a) pretreating the surface of an object with a primer onto which the polymer is intended to be applied;
(b) applying a liquid polymer as defined in any one of claims 1 to 3 to the pretreated surface:
(c) adjusting a microstructured template onto the liquid polymer, imprinting the image of its surface on the polymer;
(d) curing the polymer while the template is adjusted; and
(e) removing the template from the cured polymer.

11. The object of any one of claims 7 to 9, wherein the object comprises steel, wood, aluminium, glass, natural stone, cement, plastic, concrete, or compositions thereof.

12. The object of any one of claims 7 to 9 or 11, wherein the object is selected from the group consisting of ships, subaqueous substrates, boats, sea tons, stones, basins, offshore platforms, measuring instruments, sensors such as tsunami early warning system, footbridges, navigation marks, hulls, docks, pipes, artificial subaqueous constructs, seawater equipment, floating homes, houseboats, oil platforms, or the like.

13. Use of the antifouling coating of any one of claims 1 to 4 for the protection of surfaces of objects against fouling of for reducing adhesion of marine organisms.

14. The use of claim 13, wherein the object or surface comprises submarine structures or constructs, the inner surface of reservoirs and pipings such as used in food or paper industry, in power stations, waste water treatment plants, desalting plants, or the like.

## Patentansprüche

1. Ungiftige Antifouling-Beschichtung umfassend ein Polymer umfassend Polydimethylsiloxan (PDMS) mit einer Oberflächenenergie von etwa 20-25 mN/m und umfassend eine Oberfläche, welche mikrostrukturiert und elastisch ist, wobei die Mikrostruktur ein regelmäßig oder zufällig verteiltes Muster von Erhebungen und Vertiefungen umfasst, **dadurch gekennzeichnet, dass** R_{z}=152 µm.

2. Antifouling-Beschichtung nach Anspruch 1, wobei das Polymer weichen Silikonkautschuk umfasst.

3. Antifouling-Beschichtung nach Anspruch 2, wobei das weiche Silikon eine Härte (Shore A) von 28 hat.

4. Antifouling-Beschichtung nach Anspruch 1, wobei die Erhebungen sich in Abständen befinden in Bereichen von 40 - 450 µm, vorzugsweise 87,8 µm, 175,5 µm, 254 µm, 363 µm oder 410 µm.

5. Verfahren zur Herstellung der elastischen Antifouling-Beschichtung nach einem der Ansprüche 1 bis 4 umfassend:
(a) Aussetzen eines flexiblen Polymers, wie in einem der Ansprüche 1 bis 3 definiert, einer mikrostrukturierten Matrize;
(b) Zulassen, dass das Polymer eine mikrostrukturierte Oberfläche ausbildet, welche komplementär zu der von der Matrize ist; und
(c) Erhalten des aus Schritt (b) resultierenden Produkts.

6. Verfahren nach Anspruch 5 umfassend:
(a) Bereitstellen einer mikrostrukturierten Matrize;
(b) flaches Justieren/Fixieren der Matrize;
(c) Bereitstellen eines gießfertigen Polymers;
(d) Auftragen des flüssigen Polymers auf die Matrize;
(e) Aushärten des Polymers auf der Matrize; und
(f) Entfernen des ausgehärteten Polymers von der Matrize.

7. Objekt umfassend eine Antifouling-Beschichtung nach einem der Ansprüche 1 bis 4.

8. Objekt nach Anspruch 7, wobei die Anhaftung der Antifouling-Beschichtung an das Objekt durch eine Grundierung unterstützt wird.

9. Objekt nach einem der Ansprüche 7 bis 8 mit einer exponierten Oberfläche, wobei die exponierte Oberfläche eine Mikrostruktur umfasst, die im Wesentlichen aus Erhebungen und Vertiefungen besteht, wobei
(i) Abstände zwischen Erhebungen etwa 40 - 450 µm betragen;
(ii) Höhen der Erhebungen 152 µm betragen;
(iii) Erhebungen aus elastischen Polymeren hergestellt sind, wie in einem der Ansprüche 3 bis 6 definiert;
(iv) die Oberfläche eine Oberflächenenergie von etwa 20 bis 25 mN/m hat; und
(v) die exponierte Oberfläche eine verminderte Anhaftung mariner Organismen nach Wasserexposition aufweist im Vergleich zu einer nicht-mikrostrukturierten Oberfläche.

10. Verfahren zur Herstellung eines Objekts nach einem der Ansprüche 7 bis 9 umfassend:
(a) Vorbehandeln der Oberfläche eines Objekts mit einer Grundierung, auf welche das Polymer aufgetragen werden soll;
(b) Auftragen eines flüssigen Polymers, wie in einem der Ansprüche 1 bis 3 definiert, auf die vorbehandelte Oberfläche:
(c) Justieren einer mikrostrukturierten Matrize auf dem flüssigen Polymer, Einprägen des Abbilds ihrer Oberfläche in das Polymer;
(d) Aushärten des Polymers, während die Matrize justiert ist; und
(e) Entfernen der Matrize von dem ausgehärteten Polymer.

11. Objekt nach einem der Ansprüche 7 bis 9, wobei das Objekt Stahl, Holz, Aluminium, Glas, Naturstein, Zement, Kunststoff, Beton oder Zusammensetzungen davon umfasst.

12. Objekt nach einem der Ansprüche 7 bis 9 oder 11, wobei das Objekt ausgewählt ist aus der Gruppe bestehend aus Schiffen, Unterwassersubstraten, Booten, Seetonnen, Steinen, Becken, Offshore-Plattformen, Messinstrumenten, Sensoren wie Tsunami-Frühwarnsystem, Stegen, Seezeichen, Rümpfen, Docks, Rohren, künstlichen Unterwasserkonstruktionen, Seewasserausrüstung, schwimmenden Häusern, Hausbooten, Ölplattformen oder ähnlichen.

13. Verwendung der Antifouling-Beschichtung nach einem der Ansprüche 1 bis 4 zum Schutz von Oberflächen von Objekten gegen Fouling oder zur Verminderung der Anhaftung mariner Organismen.

14. Verwendung nach Anspruch 13, wobei das Objekt oder die Oberfläche submarine Strukturen oder Konstruktionen, die innere Oberfläche von Reservoirs und Rohranlagen, wie sie in Nahrungs- oder Papierindustrie, in Kraftwerken, Abwasserbehandlungsanlagen, Entsalzungsanlagen oder ähnlichem verwendet werden, umfasst.

## Revendications

1. Revêtement antisalissure non toxique comprenant un polymère comprenant du polydiméthylsiloxane (PDMS), ayant une énergie de surface d'environ 20 à 25 mN/m et comprenant une surface qui est microstructurée et élastique, dans lequel la microstructure comprend un motif régulier ou réparti de façon aléatoire d'élévations et de dépressions, **caractérisé en ce que** R_{z} = 152 µm.

2. Revêtement antisalissure selon la revendication 1, dans lequel le polymère comprend du caoutchouc de silicone mou.

3. Revêtement antisalissure selon la revendication 2, dans lequel le silicone mou a une dureté (Shore A) de 28.

4. Revêtement antisalissure selon la revendication 1, dans lequel les élévations sont espacées d'intervalles de 40 à 450 µm, de préférence de 87,8 µm, 175,5 µm, 254 µm, 363 µm ou 410 µm.

5. Procédé de production d'un revêtement antisalissure élastique selon l'une quelconque des revendications 1 à 4, comprenant:
(a) la soumission d'un polymère flexible tel que défini dans l'une quelconque des revendications 1 à 3 à un modèle microstructuré;
(b) le fait de permettre au polymère de former une surface microstructurée qui est complémentaire de celle du modèle; et
(c) l'obtention du produit résultant de l'étape (b).

6. Procédé selon la revendication 5, comprenant:
(a) la fourniture d'un modèle microstructuré;
(b) l'ajustement/fixation du modèle à plat;
(c) la fourniture d'un polymère prêt à verser;
(d) l'application du polymère liquide sur le modèle;
(e) le durcissement du polymère sur le modèle; et
(f) le retrait du polymère durci du gabarit.

7. Objet comprenant un revêtement antisalissure selon l'une quelconque des revendications 1 à 4.

8. Objet selon la revendication 7, dans lequel l'adhérence du revêtement antisalissure à l'objet est facilitée par un apprêt.

9. Objet selon l'une quelconque des revendications 7 à 8 ayant une surface exposée, dans lequel la surface exposée comprend une microstructure essentiellement constituée d'élévations et de dépressions, dans lequel
(i) les distances entre les élévations sont d'environ 40 à 450 µm;
(ii) les hauteurs desdites élévations sont de 152 µm;
(iii) les élévations sont faites de polymères élastiques tels que définis dans l'une quelconque des revendications 3 à 6;
(iv) la surface a une énergie de surface d'environ 20 à 25 mN/m; et
(v) la surface exposée présente une adhérence réduite à des organismes marins suite à une exposition à de l'eau, par rapport à une surface non microstructurée.

10. Procédé de production d'un objet selon l'une quelconque des revendications 7 à 9, comprenant:
(a) le prétraitement de la surface d'un objet avec un apprêt sur lequel le polymère est censé être appliqué;
(b) l'application d'un polymère liquide tel que défini dans l'une quelconque des revendications 1 à 3 sur la surface prétraitée;
(c) l'ajustement d'un modèle microstructuré sur le polymère liquide, l'impression de l'image de sa surface sur le polymère;
(d) le durcissement du polymère alors que le modèle est ajusté; et
(e) le retrait du modèle du polymère durci.

11. Objet selon l'une quelconque des revendications 7 à 9, dans lequel l'objet comprend de l'acier, du bois, de l'aluminium, du verre, de la pierre naturelle, du ciment, une matière plastique, du bêton ou des compositions de ceux-ci.

12. Objet selon l'une quelconque des revendications 7 à 9 ou 11, dans lequel l'objet est choisi dans le groupe constitué des navires, des substrats subaquatiques, des bateaux, des tonneaux de mer, des pierres, des bassins, des plateformes offshores, des instruments de mesure, des capteurs tels qu'un système d'alerte rapide d'un tsunami, des passerelles, des marques de navigation, des coques, des quais, des tuyaux, des constructions subaquatiques artificielles, un équipement d'eau de mer, des maisons flottantes, des péniches, des plateformes pétrolières ou analogue.

13. Utilisation du revêtement antisalissure selon l'une quelconque des revendications 1 à 4 pour la protection de surfaces d'objets contre des salissures ou pour la réduction de l'adhésion d'organismes marins.

14. Utilisation selon la revendication 13, dans laquelle l'objet ou la surface comprend des structures ou des constructions sous-marines, la surface intérieure de réservoirs et des canalisations telles que celles utilisées dans l'industrie alimentaire ou papetière, dans des centrales électriques, des usines de traitement des eaux usées, des usines de dessalement, ou analogue.
